# EUROPÄISCHE PATENTANMELDUNG

(11) **EP 0 905 095 A2**
(43) Veröffentlichungstag der Anmeldung: **31.03.1999**
(21) Anmeldenummer: 98890274.8
(22) Anmeldetag: 29.09.1998
(51) Int. Cl.: C03B 27/044, C03B 27/048, C03B 29/12

(54) **Modul für Heiz- und/oder Kühlplatten in Vorrichtungen zum Härten von Glastafeln**

(30) Priorität: 30.09.1997 AT 1657/97
(71) Anmelder: Lisec, Peter, 3363 Amstetten-Hausmening (AT)
(72) Erfinder: Lisec, Peter, 3363 Amstetten-Hausmening (AT)
(74) Vertreter: Beer, Manfred, Dipl.-Ing.

(57) **Zusammenfassung**

Ein Modul (1) für Heiz- oder Kühlplatten in Anlagen zum Härten von Glastafeln besteht aus einem langgestreckten Körper (2), der innen unter Ausbildung eines Kanals (4) hohl ausgebildet ist. Innerhalb des Kanals (4) und über Stege mit der einen Wand (7) des Körpers (2) verbunden, sind zwei weitere Kanäle (5) vorgesehen, die über Bohrungen (6) mit der Umgebung des Moduls (1) nach einer Seite in Verbindung stehen. Durch Nebeneinanderlegen entsprechend abgelängter Module (1) und Anbringen von Adaptern (3) an beiden Enden derselben - in den Adaptern sind die Anschlüsse für die beiden Kanäle (4 und 5) vorgesehen - können Heiz- und Kühlplatten für Anlagen zum Härten von Glastafeln in beliebiger Länge und Breite ausgeführt werden. Durch die Verwendung der erfindungsgemäßen Module (1) ergibt sich eine praktisch unterbrechungsfreie, der Glastafel zugekehrte Fläche der Heiz- oder Kühlplatten, so daß der Wärmeaustausch unterstützt durch das entsprechend temperierte, aus den Kanälen (5) austretende Druckgas (Luft) vorteilhaft erreicht wird.

## Beschreibung

Die Erfindung betrifft ein Modul zum Herstellen von Heiz- oder Kühlplatten in Anlagen zum Härten von Glastafeln mit den Merkmalen des einleitenden Teils von Anspruch 1.

Beim Härten von Glastafeln werden die zu härtenden Glastafeln, ggf. stufenweise, auf eine Temperatur über der Härtetemperatur erhitzt und dann möglichst rasch (schlagartig) auf eine Temperatur unter der Härtetemperatur abgeschreckt. Es ist auch vorgeschlagen worden, vor dem Aufheizen über die Härtetemperatur einen Vorwärmeschritt und nach dem Abschrecken unter die Härtetemperatur einen Nachkühlschritt auszuführen.

Das Übertragen von Wärme auf die Glastafeln beim Vorwärmen oder beim Aufheizen, ebenso wie das Abführen von Wärme beim Abschrecken bzw. Nachkühlen, wird in Kammern ausgeführt, wobei auch schon vorgeschlagen worden ist, die Glastafeln, die zu härten sind, zwischen Platten, die entsprechend gekühlt oder beheizt sind, hindurchzuführen.

Eine Vorrichtung der eingangs genannten Gattung ist aus der US 3 873 295 A bekannt. Die US 3 873 295 A zeigt eine Vorrichtung zum Abschrecken von Glastafeln beim Tempern derselben, wobei mehrere parallel zueinander ausgerichtete Kanäle vorgesehen sind, in deren den abzuschreckenden Glastafeln zugekehrten Wandteilen Austrittsöffnungen für Kühlgas vorgesehen sind. Zwischen den einzelnen Kanälen sind Transportrollen für die abzuschreckenden Glastafeln vorgesehen. Dabei sind mehrere zueinander parallele, kanalförmige Körper vorgesehen, die voneinander Abstand aufweisen.

Der Erfindung liegt die Aufgabe zu Grunde, ein Modul anzugeben, aus dem Heiz- oder Kühlplatten für Glashärteanlagen in einfacher Weise entsprechend den jeweils gewünschten Dimensionen aufgebaut werden können.

Gemäß der Erfindung wird diese Aufgabe mit einem Modul gelöst, das die Merkmale des kenzeichnenden Teils von Anspruch 1 aufweist.

Mit dem erfindungsgemäßen Modul können praktisch beliebig große Platten für die Heiz-, die Vorwärm-, die Absckreck- oder die Nachkühlzone von Glashärteanlagen hergestellt werden. Hiezu werden einfach auf die entsprechende Länge zugeschnittene Module in der gewünschten Anzahl nebeneinander auf einem Träger angeordnet und über an ihren Enden vorgesehene Adapter mit Zuführungen für das Heiz- oder Kühlmedium sowie für ein Gas, meist Luft, verbunden.

In bevorzugten Ausführungsformen ergibt die Erfindung auch den Vorteil, daß die für das Ausbilden von Luftkissen benutzte Luft zusätzlich gekühlt oder erwärmt wird, bevor sie aus den Platten, die aus erfindungsgemäßen Modulen hergestellt worden sind, austritt.

Weitere Einzelheiten, Merkmale und Vorteile der Erfindung ergeben sich aus der nachstehenden Beschreibung eines in der Zeichnung gezeigten Ausführungsbeispiels für ein Modul gemäß der Erfindung. Es zeigt:
Fig. 1 ein Modul in Schrägansicht (teilweise),
Fig. 2 eine Draufsicht auf ein Modul,
Fig. 3 einen Schnitt längs der Linie A-A in Fig. 2 und
Fig. 4 schematisiert eine Heiz- oder Kühlplatte bestehend aus einer Trägerplatte und erfindungsgemäßen Modulen.

Ein erfindungsgemäßes Modul 1 besteht aus einem langgestreckten Körper 2, an dessen Enden jeweils Adapter 3 angeordnet sind. In dem langgestreckten Körper 2, der beispielsweise eine rechteckige Querschnittsform aufweist, sind ein Kanal 4 und vorzugsweise zwei zueinander parallel verlaufende Kanäle 5 vorgesehen. Die Kanäle 4 und 5 kommunizieren über die Adapter 3 mit Zuführleitungen für das durch die Kanäle 4 und 5 zu zirkulierende Medium. Beispielsweise kann in dem Kanal 4 eine entsprechend erwärmte oder gekühlte Flüssigkeit (Wasser oder ein anderes Wärmetransportmedium) zirkulieren, je nach dem, ob das Modul 1 für eine Heizplatte oder eine Kühlplatte in einer Vorrichtung zum Härten von Glastafeln eingesetzt wird.

An der Wand des Körpers 2 des Moduls 1 ist über einen durchgehenden oder in Längsrichtung des Moduls 1 in mehrere Abschnitte unterteilten Steg 9 wenigstens ein Kanal 5 - im Ausführungsbeispiel sind zwei Kanäle 5 vorgesehen - angesetzt.

In dem wenigstens einen Kanal 5 wird ein Gas, vorzugsweise Luft, eingeleitet, das über Bohrungen 6 in dem Steg 9 durch die Wand 7 des Körpers 2 austritt und so ein stützendes Luftkissen für die zu härtende Glastafel bildet, wenn diese durch die von Wärme- oder Kühlplatten, die aus dem erfindungsgemäßen Modul 1 aufgebaut sind, gebildete Aufwärm- bzw. Abkühlzone transportiert wird. Sinngemäßes gilt für die Aufheiz- bzw. Abschreckzone von Vorrichtungen oder Anlagen zum Härten von Glastafeln.

Die Adapter 3 werden an beiden Enden der Körper 2 der erfindungsgemäßen Module 1 angeordnet und dort beispielsweise mit Hilfe von Mutterschrauben 8 festgelegt, so daß auch die entsprechende Abdichtung gegenüber den Stirnflächen der Körper 2 gegeben ist.

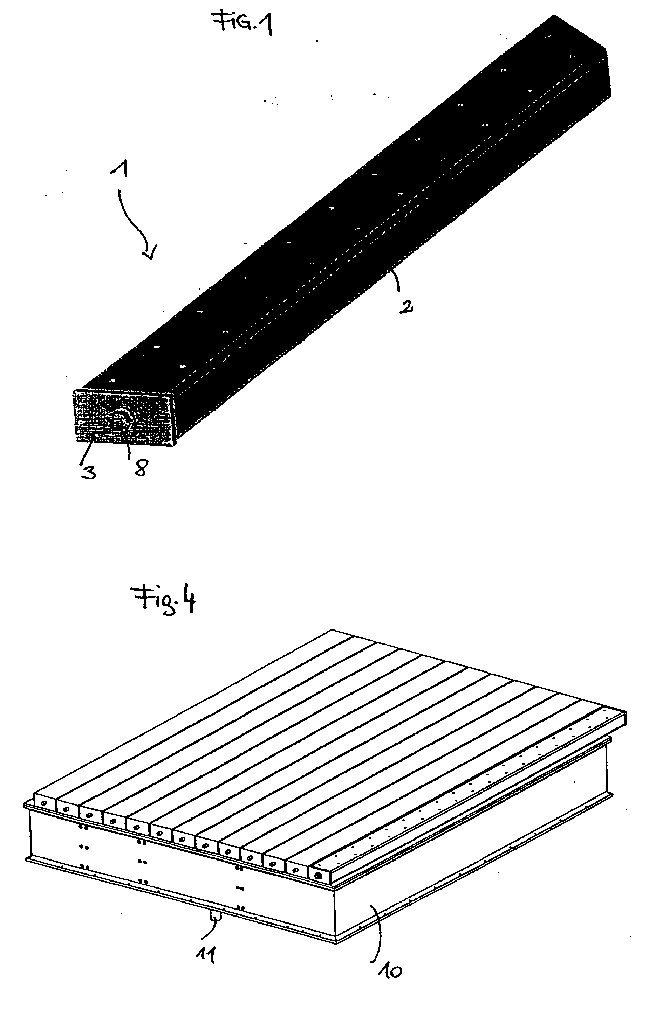

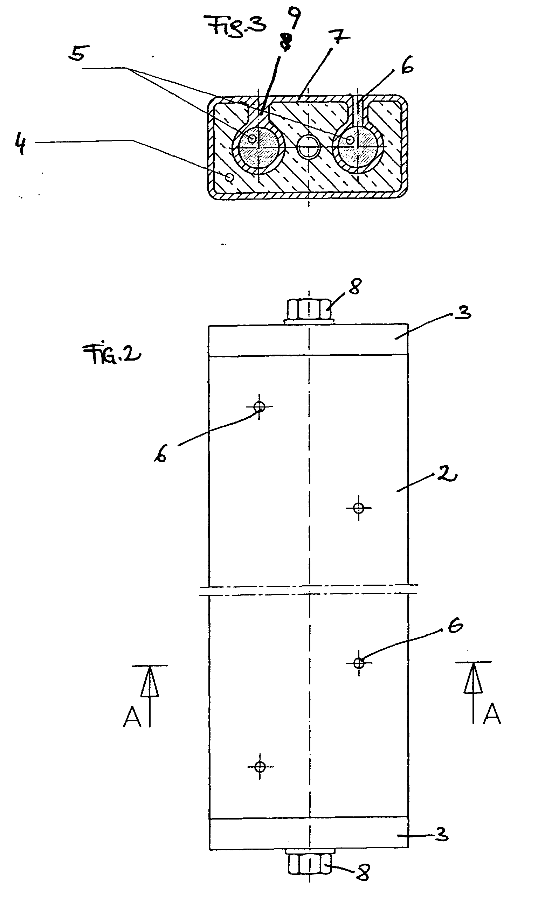

Es ist aus Fig. 2 noch ersichtlich, daß die Löcher 6, über welche die Kanäle 5, die mit Druckgas, vornehmlich mit Druckluft, beaufschlagt werden, mit der Umgebung kommunizieren, im Modul 1 zueinander versetzt angeordnet sind.

Wie Fig. 4 zeigt, werden die entsprechend abgelängten Module 1, nachdem sie mit ihren Adaptern 3 versehen worden sind, auf einer Basisplatte 10 montiert. Über die Basisplatte 10 können, wie dies durch den Anschluß 11 in Fig. 4 angedeutet ist, auch die durch die Kanäle 4 und 5 strömenden Medien zugeführt werden.

Anstelle jedes einzelne Modul 1 an beiden Enden mit eigenen Adaptern 3 zu versehen, ist es grundsätzlich auch denkbar, daß an einem der beiden Enden ein sich über mehrere, nebeneinander angeordnete Module 1 erstreckender Adapter 3 vorgesehen ist.

Die erfindungsgemäße Ausführungsform hat nicht nur den Vorteil, daß sie so flexibel ist, daß praktisch alle Größen von Heiz-, Vorwärm-, Abschreck- oder Nachkühlplatten für Vorrichtungen und Anlagen zum Härten von Glastafeln hergestellt werden können, sondern daß auch das durch den bzw. die Kanäle 5 zugeführte Stützgas (Druckluft) an die Temperatur des durch den Kanal 4 im Körper 2 des erfindungsgemäßen Moduls 1 strömenden Wärmetransportmedium angeglichen wird. Dadurch werden die gewünschten Temperaturänderungen (Aufwärmen, Aufheizen, Abschrecken, Abkühlen) einer zu härtenden Glastafel durch die aus den Bohrungen 6 austretenden Druckgasströme in vorteilhafter Weise unterstützt.

Von Vorteil ist dabei, daß das erfindungsgemäße Modul 1 Wärme auch durch Strahlung an die Glastafel abgibt bzw. Wärme von der Glastafel aufnimmt, da eine praktisch kontinuierliche, der Glastafel zugekehrte Fläche für den Wärmeaustausch durch Strahlung zur Verfügung gestellt ist.

Ein Ausführungsbeispiel der Erfindung kann zusammenfassend wie folgt beschrieben werden:

Ein Modul 1 für Heiz- oder Kühlplatten in Anlagen zum Härten von Glastafeln besteht aus einem langgestreckten Körper 2, der innen unter Ausbildung eines Kanals 4 hohl ausgebildet ist. Innerhalb des Kanals 4 und über Stege mit der einen Wand 7 des Körpers 2 verbunden, sind zwei weitere Kanäle 5 vorgesehen, die über Bohrungen 6 mit der Umgebung des Moduls 1 nach einer Seite in Verbindung stehen. Durch Nebeneinanderlegen entsprechend abgelängter Module 1 und Anbringen von Adaptern 3 an beiden Enden derselben - in den Adaptern 3 sind die Anschlüsse für die beiden Kanäle 4 und 5 vorgesehen - können Heiz- und Kühlplatten für Anlagen zum Härten von Glastafeln in beliebiger Länge und Breite ausgeführt werden. Durch die Verwendung der erfindungsgemäßen Module 1 ergibt sich eine praktisch unterbrechungsfreie, der Glastafel zugekehrte Fläche der Heiz- oder Kühlplatten, so daß der Wärmeaustausch zwischen der zu härtenden Glastafel und der Heiz- oder Kühlplatte unterstützt durch das entsprechend temperierte, aus den Kanälen 5 austretende Druckgas (Luft) vorteilhaft erreicht wird.

## Patentansprüche

1. Modul zum Herstellen von Heiz- oder Kühlplatten in Anlagen zum Härten von Glastafeln, wobei das Modul (1) einen langgestreckten Körper (2) mit wenigstens einem Kanal (5) für ein Druckgas aufweist, der über Bohrungen (6) mit der Außenseite des Moduls (1) kommuniziert, dadurch gekennzeichnet, daß der Kanal (5) für das Druckgas in einem Kanal (4) angeordnet ist, der im Inneren des Moduls (1) vorgesehen und von einem Heiz- oder kühlmedium durchströmt ist.

2. Modul nach Anspruch 1, dadurch gekennzeichnet, daß das Modul (1), wie an sich bekannt, eine flach rechteckige Querschnittsform aufweist.

3. Modul nach Anspruch 2 oder 3, dadurch gekennzeichnet, daß in dem Kanal (4) nebeneinander zwei Kanäle (5) für Druckgas vorgesehen sind.

4. Modul nach Anspruch 3, dadurch gekennzeichnet, daß die Bohrungen (6), über welche die Kanäle (5) mit der Außenseite des Moduls (1) kommunizieren, zueinander versetzt angeordnet sind.

5. Modul nach einem der Ansprüche 1 bis 4, dadurch gekennzeichnet, daß der Kanal (5) über einen angeformten Steg (9) mit der einen Wand (7) des Körpers (2) des Moduls (1) verbunden ist.

6. Modul nach einem der Ansprüche 1 bis 5, dadurch gekennzeichnet, daß an den Enden der Körper (2) Adapter (3) für das Zuführen und Abführen von durch die Module (1) strömenden Medien angeordnet sind.

7. Modul nach Anspruch 6, dadurch gekennzeichnet, daß die Adapter (3) mit den Enden der Grundkörper (2) durch eine Schraubverbindung (8) verbunden sind.

8. Modul nach Anspruch 6 oder 7, dadurch gekennzeichnet, daß mehrere nebeneinander angeordnete Module (1) an beiden Enden je einen gemeinsam ausgebildeten Adapter (3) aufweisen.
